Europäisches Patentamt

European Patent Office

Office européen des brevets

(11) Veröffentlichungsnummer: **0 455 951 A2**

## (12) EUROPÄISCHE PATENTANMELDUNG

(21) Anmeldenummer: 91103466.8

(22) Anmeldetag: 07.03.91

(51) Int. Cl.5: **B29D 30/46**

(30) Priorität: 09.05.90 DE 4014890

(43) Veröffentlichungstag der Anmeldung:
**13.11.91 Patentblatt 91/46**

(84) Benannte Vertragsstaaten:
**BE DE ES FR GB IT NL SE**

(71) Anmelder: **Karl Eugen Fischer GmbH Maschinenfabrik**

**W-8622 Burgkunstadt(DE)**

(72) Erfinder: **Holzmann, Heinrich**
**Am Klostergut 11**
**W-8621 Hochstadt a. M.(DE)**
Erfinder: **Hoffmann, Bernd**
**Sonnenhang 13**
**W-8622 Burgkunstadt(DE)**

(74) Vertreter: **Patentanwälte Czowalla . Matschkur + Partner**
**Dr.-Kurt-Schumacher-Strasse 23 Postfach 9109**
**W-8500 Nürnberg 11(DE)**

(54) Schwenkzuführeinrichtung für Cordband-Schneidvorrichtungen.

(57) Schwenkzuführeinrichtung zum taktgesteuerten Zuführen von Cordband od.dgl. zu einer Schneidvorrichtung mit einer das auf einer Kreisbahn verfahrbare Vorratsrollengestell mit dem Schneidtisch verbindenden, um das freie vordere Ende schwenkbaren Auflagefläche für das Cordband, wobei die Auflagefläche durch eine Vielzahl paralleler Förderbänder gebildet ist, die jeweils ober- und unterhalb von Auflageplatten mit vorderen und hinteren Umlenkrollen verlaufen, die am hinteren Ende starr am Vorratsrollengestell und am vorderen Ende in einer Nut des Schneidtisches schwenkbar angelenkt sind, wobei jedem Förderband eine Bandlängenausgleichsvorrichtung und Bandspannvorrichtung zugeordnet ist.

FIG. 1

EP 0 455 951 A2

Die Erfindung bezieht sich auf eine Schwenkzuführeinrichtung zum taktgesteuerten Zuführen von Cordband od.dgl. zu einer Schneidvorrichtung, mit einer das auf einer Kreisbahn verfahrbare Vorratsrollengestell mit dem Schneidtisch verbindenden, um das freie vordere Ende schwenkbaren Auflagefläche für das Cordband.

Bei den bekannten Schwenkzuführeinrichtungen ist die Auflagefläche, auf der das Cordband üblicherweise mit Hilfe einer Magnetleistentransportvorrichtung in die Schneidvorrichtung geschleppt wird, eine ebene, auf dem Schneidtisch vorne aufliegende Metallplatte, die bei der Verschwenkung, d.h. der Änderung des Neigungswinkels, mit welchem das Cordband in die Schneidvorrichtung einläuft, auf dem Tisch gleitet. Dabei ergeben sich jedoch - ausgelöst in erster Linie durch die Weichheit und die Verformbarkeit des noch unvulkanisierten Cordbandes und insbesondere seine Klebrigkeit und seine starke Haftung auf jeder Unterlage - eine Reihe von Problemen. Zum einen erfolgt durch das Aufliegen des Cordbandes am vorderen Ende beim Ändern des Einlaufwinkels, d.h. bei dem Verfahren des Vorratsrollengestells, eine Verformung des auf dem Tisch bzw. der Zuführplatte haftenden Cordbandes, die zum einen ein ständiges Anheben und Rütteln durch Hilfskräfte erforderlich macht, um überhaupt die Schwenkbewegung durchführen zu können, und zum anderen zu einem erheblichen Ausschuß führt, da ganze Abschnitte des Bandes nach einer Winkeländerung der Zuführachse durch diese Verformung unbrauchbar geworden sind. Hinzu kommt, daß durch das Anheben und Schleppen des Cordbandes mit Hilfe der Magnetleisten und der rückhaltenden Wirkung durch das klebrige Band, das auf der Unterlage entlangschleifen muß, Längungen dieses transportierten Bandabschnittes auftreten, so daß die Genauigkeit der in der Schneide abgeschnittenen Cordbandabschnitte nicht der möglichen Genauigkeit der taktgesteuerten Zuführeinrichtung entspricht.

Der Erfindung liegt daher die Aufgabe zugrunde, eine Schwenkzuführeinrichtung der eingangs genannten Art so auszugestalten, daß bei vollautomatischem Betrieb eine geringere Verformung des Cordbandes od.dgl. und damit eine größere Genauigkeit der abzutrennenden Abschnitte erzielt wird.

Zur Lösung dieser Aufgabe ist erfindungsgemäß vorgesehen, daß die Auflagefläche durch eine Vielzahl paralleler Förderbänder gebildet ist, die jeweils ober- und unterhalb von Auflageplatten mit vorderen und hinteren Umlenkrollen verlaufen, wobei diese Teleskoprohre am hinteren Ende starr am Vorratsrollengestell und am vorderen Ende in einer Nut des Schneidtisches schwenkbar angelenkt sind und wobei jedem Förderband eine Bandlängenausgleichsvorrichtung und eine Bandspannvorrichtung zugeordnet sind.

Gemäß einer ersten Ausführungsform der Erfindung kann dabei vorgesehen sein, daß die Auflageplatten aus dem mit der Schneidvorrichtung starr verbundenen Schneidtisch und einem daran anschließenden, mit dem Vorratsrollengestell verschwenkbaren äußeren Auflagertisch bestehen, wobei die in der Nut des Schneidtisches laufenden Schlitten mit den vorderen Umlenkrollen unabhängig voneinander über programmgesteuerte Antriebseinrichtungen entsprechend der Schwenkverstellung des Vorratsrollengestells verstellbar sind. Durch die Schwenkverstellung ändert sich nämlich ersichtlich der Abstand der vorderen Umlenkrollen voneinander, wobei diese Verstellung nicht erfolgt, so daß eine gesonderte Programmsteuerung der Schlitten unabhängig voneinander erforderlich ist. Jeweils von der Mitteachse aus betrachtet können lediglich jeweils zwei gleichweit davon entfernte Schlitten miteinander gekoppelt sein, da sie bezüglich der Mittelebene in gleicher Weise gegen diese oder von dieser weg verstellt werden müssen.

Bei dieser Ausbildung liegen nun zwar die Förderbänder auf den Platten auf und sind demzufolge entsprechend reibungsbehaftet. Diese Reibung der aus entsprechenden günstigen Materialien herstellbaren Förderbänder, die nur wenig Reibung zu den Metallauflageplatten haben, ist aber nicht mit der Haftreibung zu vergleichen, die das klebrige Cordband auf den Metallplatten haben würde, so daß insgesamt doch eine wesentlich verbesserte Förderung erzielt wird.

In Weiterbildung der Erfindung kann dabei bevorzugt vorgesehen sein, daß die Auflageplatten durch die Oberseiten von jeweils jedem Förderband zugeordneten, die vorderen und hinteren Umlenkrollen tragenden Teleskoprohren gebildet sind. Hinsichtlich der Reibung Förderband gegenüber der Auflageplatte ergeben sich dabei zwar noch keine entscheidenden Unterschiede, jedoch können beim Verschwenken des Auflagetisches die gesonderten, unabhängig voneinander zu steuernden Antriebsvorrichtungen für die vorderen Umlenkrollen entfallen. Es genügt in diesem Fall, daß die vorderen Enden der Teleskoprohre durch seitlich neben dem unteren Trum des Förderbandes verlaufende Arme mit jeweils einem Schwenkbolzen eines in der Nut des Schneidtisches gleitenden Linearführungsschlittens verbunden sind.

Durch die erfindungsgemäßen Förderbänder, die bevorzugt mit einer eigenen Antriebsvorrichtung versehen sind und nicht nur einfach ein leichteres, nicht durch das Kleben des Cordbandes auf der Auflage behindertes Schleppen des Cordbandes ermöglichen sollen, erfolgt beim Verschwenken des Vorratsrollengestells zur Änderung der Einlaufrichtung der Cordbandachse in die Schneidvorrichtung keinerlei Verformung des aufliegenden Cordbandes, so daß auch weder die bisher notwendigen rüttelnden Anhebbewegungen des vorderen Cordbandendes nötig sind, noch ein größerer Ausschuß auftreten kann. Die schwenkbare Anlenkung der die Förderbänder tragenden Teleskoprohre am vorderen Ende läßt sich in Ausgestaltung der Erfindung besonders einfach und wirkungsvoll in der Weise gestalten, daß das vordere Ende jedes Teleskoprohres durch seitlich neben dem unteren Trum des Förderbandes verlaufende Arme mit einem Schwenkbolzen eines in der Nut des Schneidtisches gleitenden Linearführungsschlittens verbunden ist. Durch diese Ausbildung ist sichergestellt, daß mit der Verschwenkung der Zuführungeinrichtung die Transportbänder exakt parallel zueinander bleiben, wobei jeweils das in der Mittelachse liegende Teleskoprohr seine Länge nicht verändert, während die Teleskoprohre auf der einen Seite sich verkürzen und auf der anderen verlängern. Die Bandausgleichsvorrichtung mit entsprechenden Umlenkrollen sowie mit einer Bandspannvorrichtung sorgt für einen selbsttätigen Ausgleich dieser Längenänderungen.

Um ein leichtes reibungsarmes Gleiten des Innenrohrs im Außenrohr des Teleskoprohres zu gewährleisten, kann das innere Endes des Teleskopinnenrohrs sich über eine Führungsrolle im Teleskopaußenrohr abstützen.

Grundsätzlich bedürfte es bei der erfindungsgemäßen Ausbildung der Schwenkzuführeinrichtung mit durch eine taktgesteuerte Antriebsvorrichtung angetriebenen Förderbändern keiner weiteren Transporteinrichtung, um das Cordband der Schneidvorrichtung zuzuführen. In der Praxis hat es sich allerdings gezeigt, daß durch die vielen Umlenkrollen, die zum Längenausgleich der Förderbänder und zur Aufrechterhaltung der Bandspannung notwendig sind, derart hohe Reibungen auftreten, daß es unrealistisch und unpraktisch wäre, wollte man den Bandantrieb so stark ausbilden, daß er alleine das exakte Zuführen des Cordbandes bewerkstelligt.

In Ausgestaltung der Erfindung soll daher auch bei angetriebenen Förderbändern eine zusätzliche Zuführeinrichtung in Form von das Cordband anhebenden taktgesteuert verfahrbaren Transportleisten vorgesehen sein, deren Antriebsvorrichtung mit dem Antrieb der Förderbänder synchronisiert ist. Man stellt dabei die Antriebsleistung des Förderbandantriebs so ein, daß er möglichst wenig unterhalb der Reibungsverluste liegt, so daß beim Einschalten des Vorschubs für die Transportleisten nur eine geringfügige zusätzliche Kraft erforderlich ist, um die Förderbänder mit dem aufliegenden Cordband in Bewegung zu setzen, so daß über die Transportleisten auch keine Schubkräfte in das Cordband übertragen werden und damit Verformungen und Längungen sicher verhindert sind.

In an sich bekannter Weise können dabei die Transportleisten das Cordband übergreifende Magnetleisten mit aus- und einfahrbaren Magneten und seitlich neben dem Cordband damit verbundene, das Cordband untergreifende ferromagnetische Gegenleisten umfassen.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

Fig. 1 eine schematische Aufsicht auf eine erfindungsgemäße Schwenkzuführeinrichtung für eine Cordbandschneidvorrichtung in unterschiedlichen Winkelstellungen der Schwenkzuführeinrichtung, bezogen auf die Schneidebene der Schneidvorrichtung,

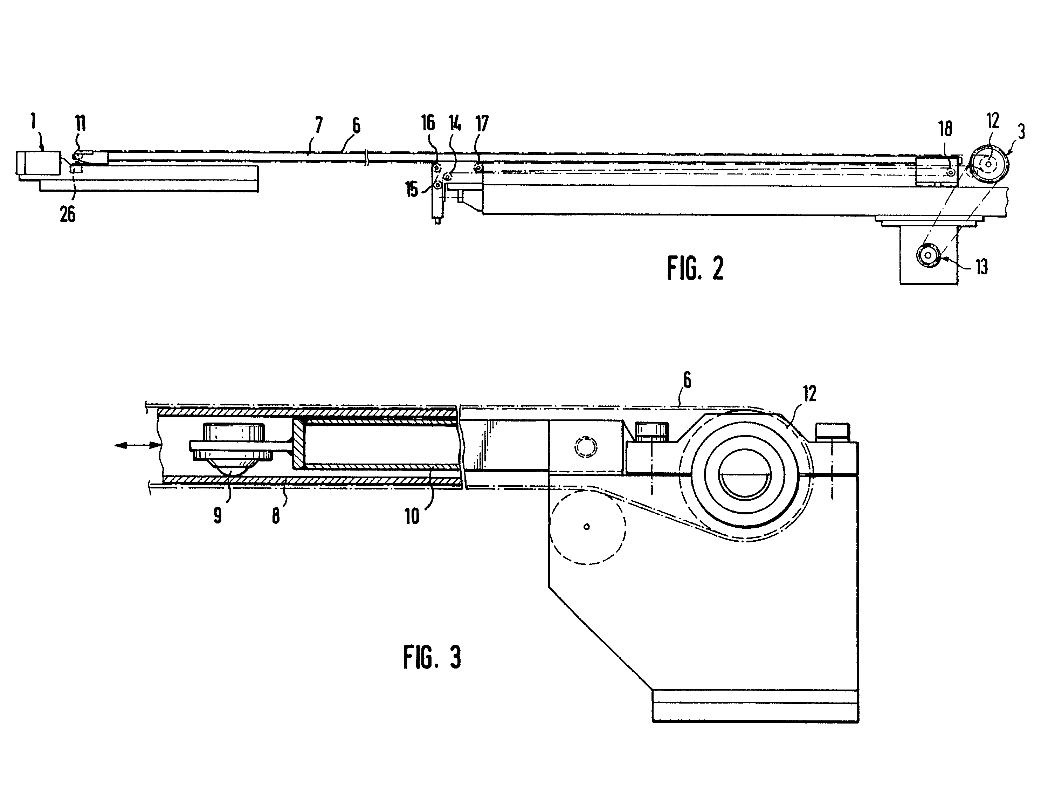

Fig. 2 eine Seitenansicht des die Förderbänder umfassenden Abschnitts der Schwenkzuführeinrichtung,

Fig. 3 eine teilweise geschnittene Teilseitenansicht eines Teleskoprohrs mit dem darumgeführten Förderband,

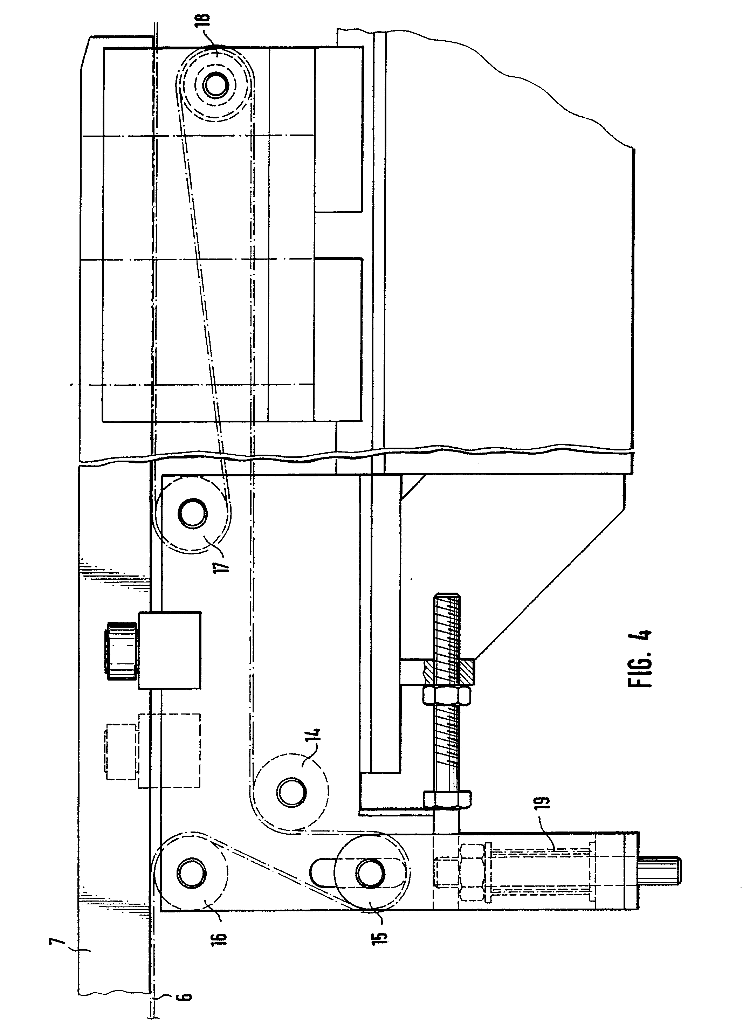

Fig. 4 eine vergrößerte Darstellung der Bandlängenausgleichs- und Bandspannvorrichtung,

Fig. 5 eine vergrößerte Seitenansicht des vorderen Endes eines Teleskoprohrs mit einem Teilschnitt durch den Schneidtisch zur Darstellung der Anlenkung der vorderen Teleskoprohrenden,

Fig. 6 eine Aufsicht auf die Anordnung nach Fig. 5,

Fig. 7 einen vergrößerten Querschnitt durch die beiden Außenförderbänder im Bereich einer Transportleiste,

Fig. 8 eine schematische Seitenansicht einer zweiten Ausführungsform einer erfindungsgemäßen Schwenkzuführeinrichtung, bei der anstelle von Teleskoprohren starre Tischplattenabschnitte vorgesehen sind, und

Fig. 9 eine Teilaufsicht auf die Anordnung nach Fig. 8.

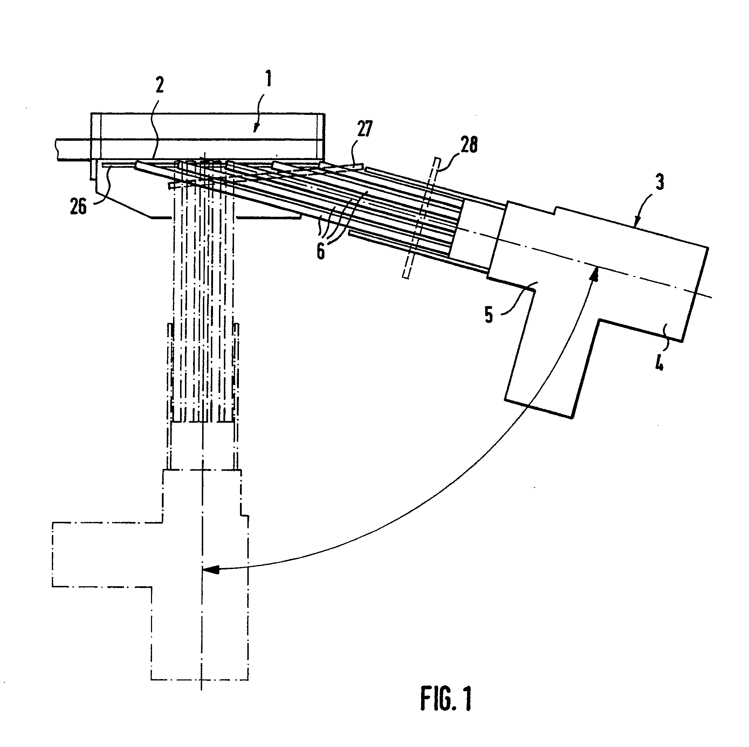

In Fig. 1 ist bei 1 lediglich schematisch eine Schneidvorrichtung angedeutet, deren Messerebene und Schnittebene bei 2 liegt. Die Schwenkzuführeinrichtung 3 für ein in der Schneidvorrichtung in Abschnitte zur Produktion von Autoreifen zuzuschneidendes Cordband kann auf einer im einzelnen nicht dargestellten Fahrbahn zwischen einer Winkelstellung von etwa 15° Neigung zur Schneidkante 2 und 90° (in Fig. 1 strichpunktiert dargestellt) verschwenkt werden. Die Schwenkzuführeinrichtung umfaßt dabei ein Vorratsrollengestell 4, einen Transportabschnitt 5 mit Antriebsvorrichtungen zum Vorziehen des Cordbandes sowie selbstverständlich auch einer Antriebsvorrichtung zum exakten Anfahren jeder gewünschten Winkelneigung zur Schneidebene 2. Zum Transport des in Fig. 1 der besseren Übersichtlichkeit halber weggelassenen Cordbandes vom Vorratsrollengestell zur Schneidvorrichtung 1 ist eine Vielzahl - in der Praxis wesentlich mehr als in der Zeichnung dargestellt - paralleler Förderbänder 6 vorgesehen, die jeweils ober- und unterhalb von Teleskoprohren 7 verlaufen, die aus einem Außenrohr 8 und einem darin über eine Führungsrolle 9 gleitenden Innenrohr 10 bestehen. Am vorderen und hinteren Ende eines derartigen Teleskoprohres sind Umlenkrollen 11 und 12 angeordnet, wobei diese Umlenkrollen auf einer gemeinsamen Achse sitzen und von einer Antriebsvorrichtung 13 angetrieben werden können. Zum Ausgleich der doch ganz erheblichen Längenänderungen der Teleskoprohre beim Verschwenken von der in Fig. 1 gezeigten geneigten Stellung zur Schneidebene in die strichpunktierte 90°-Einlaufposition ist eine Vielzahl von Umlenkrollen 14 bis 18 vorgesehen, die einen Bandlängenausgleich und in Verbindung mit einer Spannfeder 19 eine Bandspannvorrichtung bilden, so daß selbsttätig bei jeder Verschwenkung und Längenänderung der Teleskoprohre ein entsprechender Ausgleich im Förderband 6 geschaffen wird. Das vordere Ende 21 jedes Teleskoprohrs ist durch eine Verbindungsplatte 22, die seitlich neben dem rücklaufenden Trum 6b des Förderbandes am Teleskoprohr befestigt ist, mit dem Schwenkbolzen 23 eines Parallelführungsschlittens 24 verbunden, der auf einer Schiene 25 in einer Nut 26 des Schneidtisches läuft und die Parallelität der Förderbänder 6 auch beim Schwenken der Zuführeinrichtung sicherstellt.

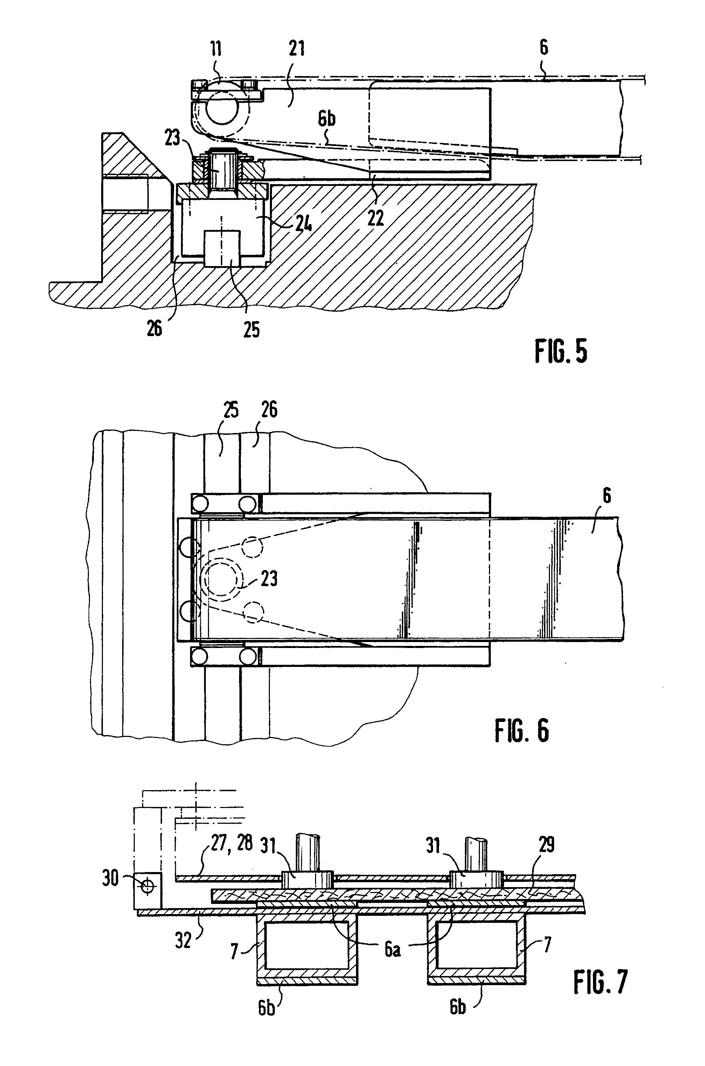

In Fig. 1 und 7 sind schematisch zwei Magnettransportleisten 27 und 28 angedeutet, deren Antrieb und Führung auf an der Schneidvorrichtung und dem Vorratsrollengestell sich abstützenden Führungsstangen im einzelnen nicht dargestellt ist, da derartige Vorrichtungen ja hinlänglich bekannt sind. Eine solche Transportleiste umfaßt eine das zu transportierende und schneidende Cordband 29 übergreifende Magnetleiste 30 mit ein- und ausfahrbaren Magneten 31 sowie eine das Cordband 29 einschließlich des abstützenden vorlaufenden Trums 6a der Förderbänder untergreifende ferromagnetische Gegenleiste 32, welche beim Ausfahren der Magnete 31 angezogen wird. Die Vorschubeinrichtung für die Transportleisten 27, 28 ist mit dem Bandantrieb synchronisiert.

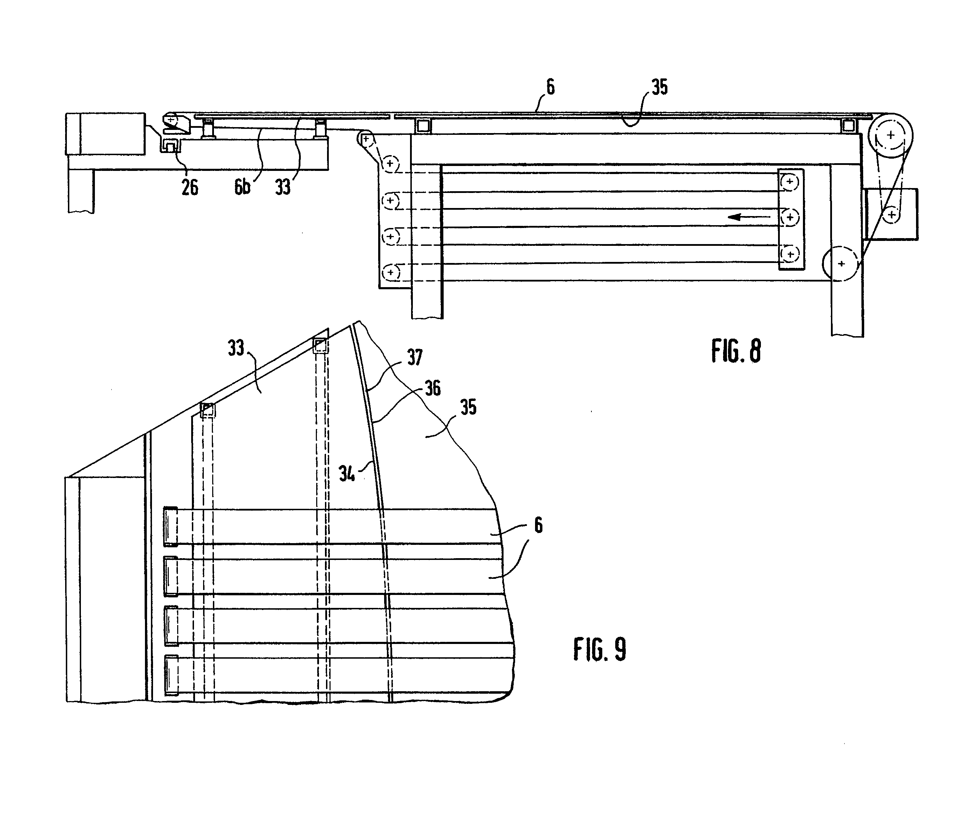

In den Figuren 8 und 9 ist eine abgewandelte Ausführungsform der Erfindung dargestellt, bei der die Auflagen für die Förderbänder 6 nicht als Teleskoprohre ausgebildet sind, die am vorderen Ende mit Linearführungsschlitten in der Nut 26 verbunden sind, sondern bei der zwei starre umeinander schwenkbare Plattenabschnitte vorgesehen sind. Dabei handelt es sich zum einen um den Schneidtisch 33 mit einer kreisbogenförmigen Außenkante 34 und einen mit dem Vorratsrollengestell starr verbundenen und mit diesem um den Schneidtisch schwenkbaren äußeren Auflagertisch 35 mit einer entsprechenden kreisbogenförmigen Innenkante 36, mit der er lediglich durch einen sehr geringen Spalt 37 getrennt an den Schneidtisch 33 anschließt. In Fig. 8 erkennt man dabei auch, wie das jeweils untere Trum 6b des Förderbandes 6 einerseits unter dem Schneidtisch 33 und andererseits auch unter dem Auflagertisch 35 verläuft, wobei unter letzterem auch die Bandlängenausgleichsvorrichtung und die Bandspannvorrichtung schematisch zu erkennen sind.

**Patentansprüche**

1. Schwenkzuführeinrichtung zum taktgesteuerten Zuführen von Cordband od.dgl. zu einer Schneidvorrichtung mit einer das auf einer Kreisbahn verfahrbare Vorratsrollengestell mit dem Schneidtisch verbindenden, um das freie vordere Ende schwenkbaren Auflagefläche für das Cordband, dadurch gekennzeichnet, daß die Auflagefläche durch eine Vielzahl paralleler Förderbänder (6) gebildet ist, die jeweils ober- und unterhalb von Auflageplatten mit vorderen und hinteren Umlenkrollen (11, 12) verlaufen, die am hinteren Ende starr am Vorratsrollengestell und am vorderen Ende in einer Nut (26) des Schneidtisches schwenkbar angelenkt sind, wobei jedem Förderband (6) eine Bandlängenausgleichsvorrichtung (14 - 18) und Bandspannvorrichtung (19) zugeordnet ist.

2. Schwenkzuführeinrichtung nach Anspruch 1, dadurch gekennzeichnet, daß die Auflageplatten aus dem mit der Schneidvorrichtung starr verbunden Schneidtisch (33) und einem daran anschließenden, mit dem Vorratsrollengestell verschwenkbaren äußeren Auflagertisch (35) bestehen, wobei die in der Nut (26) des Schneidtisches (33) laufenden Schlitten mit den vorderen Umlenkrollen unabhängig voneinander über programmgesteuerte Antriebseinrichtungen entsprechend der Schwenkverstellung des Vorratsrollengestells verstellbar sind.

3. Schwenkzuführeinrichtung nach Anspruch 1, dadurch gekennzeichnet, daß die Auflageplatten durch die Oberseiten von jeweils jedem Förderband (6) zugeordneten, die vorderen und hinteren Umlenkrollen (11, 12) tragenden Teleskoprohren (7) gebildet sind.

4. Schwenkzuführeinrichtung nach Anspruch 3, dadurch gekennzeichnet, daß das vordere Ende (21) des Teleskoprohres (7) durch seitlich neben dem unteren Trum (6b) des Förderbandes (6) verlaufende Arme (22) mit einem Schwenkbolzen (23) eines in der Nut (26) des Schneidtisches gleitenden Linearführungsschlittens (24) verbunden ist.

5.    Schwenkzuführeinrichtung nach Anspruch 3 oder 4, dadurch gekennzeichnet, daß das innere Ende des Teleskopinnenrohrs (10) sich über eine Führungsrolle (9) im Teleskopaußenrohr (8) abstützt.

6.    Schwenkzuführeinrichtung nach einem der Ansprüche 1 bis 5, gekennzeichnet durch das Cordband (29) anhebende taktgesteuert verfahrbare Transportleisten (27, 28), deren Antriebseinrichtung mit dem Antrieb der Förderbänder (6) synchronisiert ist.

7.    Schwenkzuführeinrichtung nach Anspruch 6, dadurch gekennzeichnet, daß die Transportleisten (27, 28) das Cordband (29) übergreifende Magnetleisten (30) mit aus- und einfahrbaren Magneten (31) und seitlich neben dem Cordband (29) damit verbundene, das Cordband (29) untergreifende ferromagnetische Gegenleisten (32) umfassen.

FIG. 1

FIG. 2

FIG. 3

EP 0 455 951 A2

FIG. 4

FIG. 5

FIG. 6

FIG. 7

FIG. 8

FIG. 9

EP 0 455 951 A2